# EUROPEAN PATENT SPECIFICATION

(11) **EP 1 812 520 B1**
(45) Date of publication and mention of the grant of the patent: **22.02.2012**
(21) Application number: 04791892.5
(22) Date of filing: 07.10.2004
(51) Int. Cl.: C09C 3/00, C09C 1/00

(54) **POWDER CALCINATION PROCESS**
PULVERKALZINIERUNGSVERFAHREN
PROCEDE DE CALCINATION DE POUDRES

(43) Date of publication of application: 01.08.2007
(73) Proprietor: Colorobbia Italia S.p.a., 50053 Sovigliana Vinci (Firenze) (IT)
(72) Inventor: BITOSSI, Marco, I-50056 Montelupo Fiorentino (IT); DEL CONTE, Alessandro, I-50056 Montelupo Fiorentino (IT); MASSAINI, Gianfranco, I-50059 San Donato Vinci (IT)
(74) Representative: Gervasi, Gemma
(86) International application number: PCT/IT2004/000558
(87) International publication number: WO 2006/038236

(56) References cited:
- DE-A1- 3 242 747
- US-A- 3 649 171
- US-A- 3 853 574
- US-A- 3 856 545
- US-A- 4 261 966
- US-A- 5 174 817
- US-A- 5 496 403

## Description

### FIELD OF THE INVENTION

The present invention refers to the field of the production of ceramic pigments, and in particular to a process for calcination of the raw powders.

### STATE OF THE ART

As is known, in the processes for production of pigments, in particular those used in the sector of ceramics, the raw products (generally mixtures of metal oxides in powder form) are calcined.

In the known technique calcination of the powders necessary for the production of pigments is performed by placing the powders inside continuous or discontinuous kilns in which, due to the high temperatures, a series of reactions take place which lead to the formation of the required pigment.

In the continuous production processes, the powders are fed in a continuous flow into kilns which have a structure comprising a heated cylindrical conduit. The powders pass through said cylindrical conduit of the kiln undergoing the thermal calcination treatment.

The kilns used are generally of two types: "rotary", so called as they rotate around a longitudinal axis slanting with respect to the horizontal, or "fixed" with a vertical axis.

The vertical-axis fixed kilns, which are a very recent development and in particular have been described in the Italian patent 01310183, have a heating chamber containing a cylindrical conduit positioned vertically into which the powders fall by gravity at a speed that can be determined by adjusting the width of the kiln outlet section which is positioned at the bottom of the kiln or via a screw conveyor with adjustable speed. The powders are heated as required by heating devices (gas, electrical, etc.) arranged externally to said slip cylindrical conduit.

With respect to the traditional continuous kilns, in which the powders run along an essentially horizontal or slightly slanting plane, these vertical kilns have, among others, the advantage of permitting the production of special pigments which would otherwise be difficult to obtain and are therefore of interest for industrial use. However, they have a problem which can seriously affect their use.

During the calcination stage, as the product sinters it forms agglomerates of different dimensions which prevent its smooth flow and can even cause complete obstruction of the cylindrical conduit.

To remedy said drawback, many solutions have been proposed, for example the introduction of a screw in the slip cylindrical conduit or flaring of the cylindrical conduit (narrower at the material inlet point and wider at the outlet), but none of them have succeeded in solving the problem satisfactorily.

In literature, especially in the metallurgical field, many mineral heat treatment processes are known in which the material is introduced into the kilns, generally horizontal or slanting, in the form of pellets (see for example US 6,221,127). This process is advantageous for smelting but in the field of pigments this solution has never been suggested since to obtain the required product (namely the pigment) it has always been considered essential for the material to be calcined in powder form.

### SUMMARY OF THE INVENTION

The aim of the present invention is therefore to make available a powder calcinations process which permits exploitation of all the advantages offered by a vertical kiln, overcoming the above-mentioned drawbacks, comprising the following stages:
- the powders undergo an agglomeration process in order to aggregate the individual powder particles into structures with dimensions larger than the dimensions of the individual particles;
- the agglomerated powders undergo a drying process;
- said agglomerates are then introduced continuosly into the calcination conduit of a vertical kiln where they undergo the calcination heat treatment;
- the calcined agglomerates are collected from the kiln.

### DETAILED DESCRIPTION OF THE INVENTION

It has now surprisingly been found that in a vertical kiln it is possible to use the starting material in the form of pellets without affecting the final result (i.e. obtaining pigments with all the required characteristics obtained with the traditional Systems) and overcoming the possible problems posed by the flow difficulty of the sintered mass.

An advantage of the method according to the invention is that it is simple and inexpensive to implement, does not require particular plant adaptations and improves the quality and efficiency of the calcination treatment, making the materials extremely smooth-flowing inside the kiln.

Further characteristics and advantages will appear more clearly from the detailed description of a method for calcination of powders illustrated below as a non-restrictive example.

According to the process of the invention, the powders previously undergo an agglomeration process in order to aggregate the individual powder particles into structures with larger dimensions than the dimensions of the individual particles.

The agglomeration stage is extremely effective in increasing the flowability of the powders inside the calcination conduit. In fact the larger dimensions of the agglomerated structure reduce the overall contact surface present inside the mass of powder; making it more smooth-flowing. The individual agglomerated structures, for example in the form of spheres or flakes, can also "squash", reducing their volume and also reducing the "pressure" inside the mass of powder, compensating for the effects of the heat treatment.

The agglomeration can be performed in different ways according to the type of powder mixture used.

One of these ways provides for the powders to be introduced into a cylindrical receptacle which rotates around an axis slanting with respect to the vertical; the powders are sprayed with atomized water while the receptacle rotates. The humidification of the powders with atomized water, combined with the rotating movement of the cylindrical receptacle, causes the individual particles to combine forming spheroidal shapes (pellets) of varying dimensions according to the rotation speed of the cylindrical receptacle and the time the particles remain in the cylinder. Another way of obtaining powder agglomeration is by pressing.

In this way, the pressed powders agglomerate in the form of flakes, the dimensions of which depend on the volume of the powders pressed. Agglomeration leads to the formation of structures (pellets or flakes) which preferably have dimensions from 2 to 10000 or more times greater than the dimensions of the individual powder particles.

At the end of the agglomeration stage, the powders undergo a drying process which eliminates the excess humidity. Excessive humidity would jeopardise the advantages of agglomeration of the powders, which would tend to cake together, thus drastically reducing their flowability.

The agglomerates thus obtained (pellets or flakes) are then introduced continuously into the calcination conduit positioned inside the kiln. Inside said conduit the powders undergo the calcination heat treatment which, for the powders used in the ceramics industry to obtain colourings, is currently performed at a temperature of between 750° and 1400°C.

At the end of the treatment the agglomerates are removed from the calcination conduit and are sent on for storage or to the subsequent stages of the production cycle.

With the process according to the invention the powders are made extremely smooth-flowing inside the kiln, eliminating the clogging and improving the quality and efficiency of the calcination treatment. Furthermore, the method is simple and inexpensive to implement and does not require particular kiln adaptations.

A process for preparation of ceramic pigments using the process according to the invention is illustrated below.

### EXAMPLE

50 kg of zirconium-based crude pigment in powder form are used and pellets of approximately 1 cm in diameter are formed using a standard pelletizer.

The pellets are dried in a gas oven and then left to cool at ambient temperature. The pellets are then loaded, by means of a hopper, into the kiln conduit and left to drop down it by gravity.

The conduit is kept at a temperature of approximately 950°C and the pellets pass through it at a rate of approximately 10 kg/h.

The sintered pigment spheres thus produced are ready to be conveyed to the warehouse for storage or to the subsequent work stages.

No clogging of the conduit or delays in outflow of the sintered pellets from the kiln occurs, furthermore the pigment has characteristics similar to those of the pigment obtained by calcination in traditional kilns.

## Claims

1. Process for calcination of powders for the preparation of ceramic pigments, **characterised in that** it comprises the following stages:
- the powders undergo an agglomeration process in order to aggregate the individual powder particles into structures with dimensions larger than the dimensions of the individual particles;
- the agglomerated powders undergo a drying process;
- said agglomerates are then introduced continuosly into the calcination conduit of a vertical kiln where they undergo the calcination heat treatment;
- the calcined agglomerates are collected from the kiln.

2. Process according to claim 1 in which said agglomeration process is performed by means of an industrial pelletizer.

3. Process according to claim 1 in which said agglomeration process is performed by pressing.

4. Process according to claims 1 - 3, **characterised in that** the continuous kiln is a rotary kiln.

5. Process according to claims 1 - 3, **characterised in that** the continuous kiln is a vertical-axis fixed kiln.

6. Process according to claims 1 - 5 in which the agglomerates, pellets or flakes are approximately 1 cm in diameter.

7. Process according to claims 1 - 6 in which the temperature of the kiln is approximately 950°C.

8. Process according to claims 1 - 7 in which the kiln is an electric kiln.

## Patentansprüche

1. Verfahren zur Kalzinierung von Pulvern zum Zweck der Herstellung keramischer Pigmente, **dadurch gekennzeichnet, dass** es die folgenden Stufen umfasst:
- die Pulver durchlaufen einen Agglomerationsvorgang, damit die einzelnen Teilchen des Pulvers zu Strukturen aggregieren, deren Abmessungen größer sind als die Abmessungen der einzelnen Teilchen;
- die agglomerierten Pulver durchlaufen einen Trocknungsvorgang;
- die genannten Agglomerate werden dann kontinuierlich in den Kalzinierungskanal eines vertikalen Brennofens eingeleitet, wo sie die Warmbehandlung der Kalzinierung durchlaufen;
- die kalzinierten Agglomerate werden dann aus dem Ofen genommen.

2. Verfahren nach Anspruch 1, bei welchem der genannte Agglomerationsvorgang mit Hilfe einer industriellen Pelletiervorrichtung erfolgt.

3. Verfahren nach Anspruch 1, bei welchem der genannte Agglomerationsvorgang durch Pressen erfolgt.

4. Verfahren nach Anspruch 1 bis 3, **dadurch gekennzeichnet, dass** der Durchlaufofen ein Drehofen ist.

5. Verfahren nach Anspruch 1 bis 3, **dadurch gekennzeichnet, dass** der Durchlaufofen ein feststehender Ofen mit vertikaler Achse ist.

6. Verfahren nach Anspruch 1 bis 5, bei welchem die Agglomerate, Pellets oder Flocken einen Durchmesser von ungefähr 1 cm haben.

7. Verfahren nach Anspruch 1 bis 6, bei welchem die Temperatur des Ofens annähernd 960 °C beträgt.

8. Verfahren nach Anspruch 1 bis 7, bei welchem der Ofen ein Elektroofen ist.

## Revendications

1. Procédé de calcination de poudres pour la préparation de pigments céramiques, **caractérisé en ce qu'**il comprend les étapes suivantes:
- les poudres subissent un processus d'agglomération pour que les particules de poudre individuelles s'agrègent en structures ayant des dimensions plus grandes que les dimensions des particules individuelles;
- les poudres agglomérées subissent un processus de séchage;
- lesdits agglomérés sont ensuite introduits continuellement dans le conduit de calcination d'un four vertical où ils subissent le traitement thermique de calcination;
- les agglomérés calcinés sont recueillis du four.

2. Procédé selon la revendication 1, dans lequel ledit processus d'agglomération est exécuté au moyen d'un granulateur industriel.

3. Procédé selon la revendication 1, dans lequel ledit processus d'agglomération est exécuté par pressage.

4. Procédé selon les revendications 1 à 3, **caractérisé en ce que** le four continu est un four rotatif.

5. Procédé selon les revendications 1 à 3, **caractérisé en ce que** le four continu est un four fixe à axe vertical.

6. Procédé selon les revendications 1 à 5, dans lequel les agglomérés, granulés ou paillettes ont un diamètre d'approximativement 1 cm.

7. Procédé selon les revendications 1 à 6, dans lequel la température du four est approximativement de 950°C.

8. Procédé selon les revendications 1 à 7, dans lequel le four est un four électrique.
